# EUROPEAN PATENT APPLICATION

(11) **EP 3 440 943 A1**
(43) Date of publication of application: **13.02.2019**
(21) Application number: 17779096.1
(22) Date of filing: 03.04.2017
(51) Int. Cl.: A23K 50/80, A23K 10/22, A23K 20/142

(54) **FEED FOR AQUATIC ORGANISMS**

(30) Priority: 04.04.2016 JP 2016075383
(71) Applicant: Ajinomoto Co., Inc., Tokyo 104-8315 (JP)
(72) Inventor: TAKIMOTO, Tetsuya, Kawasaki-shi Kanagawa 210-8681 (JP); HIKICHI, Chika, Tokyo 104-0031 (JP); CHIN, Keigi, Kawasaki-shi Kanagawa 210-8681 (JP); NATSUME, Manami, Kawasaki-shi Kanagawa 210-8681 (JP); BANNAI, Makoto, Kawasaki-shi Kanagawa 210-8681 (JP)
(74) Representative: Strehl Schübel-Hopf & Partner
(86) International application number: PCT/JP2017/013947
(87) International publication number: WO 2017/175718

(57) **Abstract**

A feed for an aquatic organism and a method for culturing an aquatic organism are provided. An aquatic organism is cultured by feeding a feed for an aquatic organism to which an arginine derivative such as agmatine has been added to the aquatic organism.

## Description

### Technical Field

The present invention relates to a feed for an aquatic organism such as fishes and crustaceans, and a method for culturing an aquatic organism.

### Background Art

In recent years, because of the influences of the rapid reduction of the sardine resources in Japan, remarkable decrease of the catch of raw material fishes in Chile and Peru due to El Nino occurring in the sea around South America, and so forth, supply and demand of feed raw materials, especially fish meal and fish oil, are under extremely severe conditions in the world. Because of such situations, there is desired development of feed for fish breeding of new type, freed from the concept of the conventional fish meal and fish oil-dependent fish breeding feeds.

Fish meal is blended in feeds mainly as a protein supply source. Therefore, as alternative raw materials for fish meal, vegetable proteins such as soybean meal and corn gluten meal, and animal proteins such as chicken meal are used. However, use of feeds containing such fish meal alternative raw materials invites a problem of degradation of breeding results.

Various attempts have been made to solve such problems, for example, it has been reported that breeding results are improved by blending taurine (Patent document 1), or inosine (Patent document 2).

### Prior art references

### Patent documents

Patent document 1: Japanese Patent Laid-open (KOKAI) No. 2001-120190
Patent document 2: Japanese Patent Laid-open (KOKAI) No. 2015-142566

### Summary of the Invention

### Object to be Achieved by the Invention

An object of the present invention is to provide a feed for an aquatic organism such as fishes and crustaceans, and a method for culturing an aquatic organism.

### Means for Achieving the Object

The inventor of the present invention conducted various researches, as a result, found that, by feeding a feed containing an arginine derivative such as agmatine and putrescine, breeding results of fishes such as tiger puffer can be improved, and accomplished the present invention.

Thus, the present invention can be embodied, for example, as follows.
[1] A feed for an aquatic organism, the feed containing an arginine derivative.
[2] The feed mentioned above, which is a feed for an aquatic organism to which the arginine derivative has been added.
[3] The feed mentioned above, which is a feed for an aquatic organism of which the contained amount of the arginine derivative has been increased.
[4] The feed mentioned above, wherein the arginine derivative is agmatine.
[5] The feed mentioned above, wherein the arginine derivative is putrescine.
[6] The feed mentioned above, wherein the contained amount of the arginine derivative is 0.02% (w/w) or higher.
[7] The feed mentioned above, wherein the contained amount of the arginine derivative is 0.08% (w/w) or higher.
[8] The feed mentioned above, of which the amount of fish meal has been reduced.
[9] The feed mentioned above, wherein the contained amount of fish meal is 60% (w/w) or lower.
[10] The feed mentioned above, wherein the aquatic organism is an aquatic organism deficient in biosynthesis system of the arginine derivative.
[11] The feed mentioned above, wherein the aquatic organism is a fish or crustacean.
[12] The feed mentioned above, wherein the aquatic organism is tiger puffer, bastard halibut, bluefin tuna, Atlantic salmon, rainbow trout, European eel, catfish, tilapia, red tonguesole, Atlantic cod, cyprinodont, zebrafish, red seabream, or shrimp.
[13] A composition used for culturing an aquatic organism, the composition containing an arginine derivative at a contained amount of 99.9% (w/w) or lower.
[14] The composition mentioned above, wherein the arginine derivative is agmatine.
[15] The composition mentioned above, wherein the arginine derivative is putrescine.
[16] The composition mentioned above, wherein the composition is used together with a feed for an aquatic organism so that the contained amount of the arginine derivative in the feed is 0.02% (w/w) or higher.
[17] The composition mentioned above, wherein the composition is used together with a feed for an aquatic organism so that the contained amount of the arginine derivative in the feed is 0.08% (w/w) or higher.
[18] The composition mentioned above, wherein the composition is used together with a feed for an aquatic organism so that the addition amount of the arginine derivative to the feed is 0.01% (w/w) or larger.
[19] The composition mentioned above, wherein the feed for an aquatic organism is a feed for an aquatic organism of which the amount of fish meal has been reduced.
[20] The composition mentioned above, wherein the contained amount of fish meal in the feed for an aquatic organism is 60% (w/w) or lower.
[21] The composition mentioned above, wherein the aquatic organism is an aquatic organism deficient in biosynthesis system of the arginine derivative.
[22] The composition mentioned above, wherein the aquatic organism is a fish or crustacean.
[23] The composition mentioned above, wherein the aquatic organism is tiger puffer, bastard halibut, bluefin tuna, Atlantic salmon, rainbow trout, European eel, catfish, tilapia, red tonguesole, Atlantic cod, cyprinodont, zebrafish, red seabream, or shrimp.
[24] The composition mentioned above, wherein the composition is an agent for improving a breeding result for the aquatic organism.
[25] The composition mentioned above, wherein the improvement of the breeding result consists of an increase in body weight, an increase in body length, an improvement of feed conversion ratio, a decrease of caudal fin deficiency rate, or a combination thereof.
[26] A method for culturing an aquatic organism, the method comprising:
   feeding an arginine derivative to the aquatic organism.
[27] The method mentioned above, wherein the arginine derivative is fed to the aquatic organism by feeding the feed mentioned above, or the composition mentioned above to the aquatic organism.

### Modes for Carrying out the Invention

Hereafter, the present invention will be explained in detail.

### <1> Arginine derivative

An arginine derivative is used in the present invention. By using an arginine derivative, specifically, by culturing an aquatic organism by feeding an arginine derivative to the aquatic organism, a breeding result of the aquatic organism can be improved. Cultivation is also referred to as "breeding". The effect of improving a breeding result of an aquatic organism is also referred to as "breeding result-improving effect". In particular, according to an embodiment of the present invention, by culturing an aquatic organism by feeding an arginine derivative to the aquatic organism, degradation of a breeding result caused by breeding with a reduced amount of fish meal can be prevented or ameliorated. Examples of the improvement of a breeding result include increase in body weight, increase in body length, improvement (reduction) of feed conversion ratio, and decrease in caudal fin deficiency rate. Specifically, the decrease in caudal fin deficiency rate may be due to, for example, prevention of biting each other. The term "feed conversion ratio (FCR)" means weight of feed required for increase (growth) of a unit weight of body weight. The feed conversion ratio is also referred to as "feed demand ratio". In the present invention, the breeding result-improving effect may be obtained for one kind of breeding result, or two or more kinds of breeding results.

The term "arginine derivative" is a general term for compounds that can be produced when arginine is metabolized. Specific examples of the arginine derivative include, for example, agmatine, putrescine, spermidine, spermine, γ-guanidinobutyraldehyde, γ-guanidinobutyrate, and γ-aminobutyrate. Preferred examples of the arginine derivative include agmatine and putrescine. Preferred examples of the arginine derivative also include an arginine derivative of which the biosynthesis system is lacked in an objective aquatic organism. That is, for example, when an objective aquatic organism is deficient in the biosynthesis system of agmatine, preferred examples of the arginine derivative include agmatine and metabolites thereof. In the present invention, one kind of arginine derivative may be used, or two or more kinds of arginine derivatives may be used in combination.

The arginine derivative may be a free compound, a salt, or a mixture of these. That is, the term "arginine derivative" used for the present invention means an arginine derivative as a free compound, a salt thereof, or a mixture of them, unless otherwise stated. Examples of the salt include, for example, sulfate, hydrochloride, carbonate, ammonium salt, sodium salt, and potassium salt. As the salt, one kind of salt may be used, or two or more kinds of salts may be used in combination. When the arginine derivative forms a salt, the amount (contained amount, addition amount, etc.) of the arginine derivative mentioned later shall be calculated as the amount of the arginine derivative in term of a value obtained by converting the mass of the salt into the mass of the corresponding free compound in an amount equimolar to the salt, unless otherwise stated.

As the arginine derivative, a commercial product may be used, or one appropriately produced may also be used.

Methods for producing the arginine derivative are not particularly limited, and for example, a known method can be used. The arginine derivative can be produced by, for example, a chemical synthesis method, enzymatic method, fermentation method, extraction method, or a combination of these. The arginine derivative can be produced by, for example, conversion of arginine. Conversion of arginine into an arginine derivative can be carried out by, for example, an enzymatic method using a biosynthesis system enzyme of the arginine derivative. Specifically, for example, a method for producing agmatine from arginine using arginine decarboxylase has been reported (Japanese Patent Laid-open (KOKAI) No. 2002-345496). Arginine can be produced by, for example, culturing a microorganism having an arginine-producing ability, and collecting arginine from the culture broth. Specifically, for example, a method for producing arginine by a fermentation method using *Escherichia coli* of which expression of an *argA* gene encoding N-acetylglutamate synthase is enhanced has been reported (Japanese Patent Laid-open (KOKAI) No. 2002-315571). The arginine derivative can be produced by, for example, culturing a microorganism having an arginine derivative-producing ability, and collecting the arginine derivative from the culture broth. Specifically, agmatine can be produced by, for example, a fermentation method using an arginine-producing strain such as *Escherichia coli* of which expression of an *argA* gene is enhanced, wherein expression of an *adiA* gene encoding arginine decarboxylase is further enhanced in the strain.

The arginine derivative may or may not be a purified product. Namely, for example, a material containing an arginine derivative as it is may be used as the arginine derivative, or such a material may be subjected to such a treatment as concentration, dilution, drying, fractionation, extraction, and purification as required, and then used as the arginine derivative. Specific examples of the material containing an arginine derivative include, for example, an arginine derivative fermentation broth (culture product containing an arginine derivative and obtained by culturing a microorganism having an arginine derivative-producing ability), a culture supernatant separated from the fermentation broth, and cells separated from the fermentation broth. The arginine derivative may be purified to a desired extent. The purity of the arginine derivative may be, for example, 30% (w/w) or higher, 50% (w/w) or higher, 70% (w/w) or higher, 90% (w/w) or higher, or 95% (w/w) or higher.

### <2> Aquatic organism

The objective aquatic organism of the present invention is not particularly limited, so long as a breeding result-improving effect is obtained. A preferred aquatic organism is an aquatic organism deficient in the biosynthesis system of an arginine derivative. The expression that "deficient in the biosynthesis system of an arginine derivative" specifically means that an aquatic organism is deficient in one or more kinds of enzymes selected from one or more kinds of enzymes constituting a metabolic pathway from arginine to the arginine derivative. The aquatic organism may inherently deficient in the biosynthesis system of an arginine derivative, or may be modified (by breeding or the like) so that it lacks the biosynthesis system of the arginine derivative. The aquatic organism may be deficient in the biosynthesis system of one kind of arginine derivative, or deficient in biosynthesis system enzymes of two or more kinds of arginine derivatives.

Specific examples of the biosynthesis system enzyme of arginine derivative include arginine decarboxylase, agmatinase, spermidine synthase, spermine synthase, diamine oxidase, aldehyde dehydrogenase, and hydrolase. Arginine is converted into agmatine by arginine decarboxylase. Agmatine can be further converted into any of the other arginine derivatives exemplified above. Specifically, agmatine is successively converted into putrescine, spermidine, and spermine by agmatinase, spermidine synthase, and spermine synthase. Agmatine is also successively converted into γ-guanidinobutyraldehyde, γ-guanidinobutyrate, and γ-aminobutyrate by diamine oxidase, aldehyde dehydrogenase, and hydrolase. That is, for example, the expression "deficient in the biosynthesis system of agmatine" means to be deficient in arginine decarboxylase. Furthermore, for example, the expression "deficient in the biosynthesis system of putrescine" means to be deficient in arginine decarboxylase and/or agmatinase. Furthermore, for example, the expression "deficient in the biosynthesis system of spermine" means to be deficient in one or more kinds of enzymes selected from arginine decarboxylase, agmatinase, spermidine synthase, and spermine synthase.

Whether or not an aquatic organism is deficient in an objective enzyme can be determined, for example, on the basis of genome information of the aquatic organism (WO2013180226A1). That is, a function of a protein that is presumed to be possessed by an aquatic organism on the basis of genome information of the aquatic organism is presumed to determine whether the aquatic organism have an objective enzyme. A function of a protein can be presumed by comparing the amino acid sequence of the protein with the amino acid sequence of a known protein. Comparison of amino acid sequences can be carried out by using, for example, BLAST. Specifically, for example, by comparing genome information of an aquatic organism and annotated genome information of another organism on the amino acid sequence level of encoded proteins, whether the aquatic organism has a gene encoding the objective enzyme can be determined. When possession of a gene encoding the objective enzyme is not confirmed in an aquatic organism, the aquatic organism can be judged to be deficient in the objective enzyme. As genome information of an organism as an object for comparison, for example, genome information of mammals such as human can be used.

Examples of the aquatic organism include fishes and crustaceans. Specific examples of fishes include, for example, tiger puffer *(Takifugu rubripes),* bastard halibut (*Paralichthys olivaceus*), bluefin tuna (*Thunnus orientalis*), Atlantic salmon (*Salmo salar*)*,* rainbow trout (*Oncorhynchus mykiss*), European eel (*Anguilla anguilla*)*,* catfish (*Silurus asotus* etc.), tilapia (*Oreochromis niloticus* etc.), red tonguesole (*Cynoglossus joyneri*)*,* Atlantic cod (*Gadus morhua*), cyprinodont (*Oryzias latipes* etc.), zebrafish (*Danio rerio*), and red seabream (*Pagrus major*). These fishes are fishes for which expression of a gene encoding arginine decarboxylase is not confirmed. Examples of crustaceans include, for example, shrimps (prawns) and crabs. Specific examples of crustacean include, for example, vannamei shrimp (*Litopenaeus vannamei*), Japanese tiger prawn (*Marsupenaeus japonicus*), black tiger prawn (*Penaeus monodon*), white leg shrimp (*Litopenaeus vannamei*), and swimming crab (*Portunus trituberculatus*)*.*

### <3> Feed of the present invention

The feed of the present invention is a feed for an aquatic organism containing an arginine derivative. Specifically, the feed of the present invention is a feed for an aquatic organism to which an arginine derivative has been added. That is, in other words, the feed of the present invention is a feed for an aquatic organism containing an added arginine derivative. In the feed of the present invention, the contained amount of the arginine derivative has been increased by addition of the arginine derivative. That is, in other words, the feed of the present invention is a feed for an aquatic organism of which the contained amount of the arginine derivative has been increased. The expression "the contained amount of the arginine derivative is increased" means that the contained amount of the arginine derivative in the feed of the present invention is higher than the contained amount of the arginine derivative in a control feed. The "control feed" refers to a feed for an aquatic organism to which the arginine derivative has not been added. Examples of the control feed include usual feeds for aquatic organisms such as feeds for aquatic organisms containing fish meal as a main ingredient, to which any arginine derivative has not been added. Specifically, examples of the control feed include, for example, the feed used in the examples to which any arginine derivative was not added. "To add" is also expressed as "to blend". The term "for an aquatic organism" means that the feed is used for culturing (breeding) of an aquatic organism. The feed of the present invention may contain one kind of arginine derivative, or may contain two or more kinds or arginine derivatives in combination. By culturing an aquatic organism by feeding the feed of the present invention, a breeding result of the aquatic organism can be improved.

The composition of the feed of the present invention is not particularly limited, so long as the feed of the present invention contains an arginine derivative, and a breeding result-improving effect can be obtained.

The types of ingredients contained in the feed of the present invention can be appropriately chosen according to various conditions such as type and growth stage of the objective aquatic organism, and usage scheme of the feed of the present invention. For example, the feed of the present invention may contain an ingredient similar to those contained in feeds such as usual feeds for aquatic organisms, in addition to the arginine derivative. Examples of such an ingredient include animal feed ingredients, vegetable feed ingredients, and other various feed ingredients. Specific examples of the animal feed ingredients include, for example, fish meal, fish soluble, powdered bone, and chicken meal. Specific examples of the vegetable feed ingredients include, for example, cereal powder (wheat flour etc.), vegetable protein (wheat gluten, corn gluten, etc.), starch (cornstarch etc.), and vegetable oil meal (soybean meal etc.). Specific examples of the other ingredients include, for example, amino acid fermentation meal (lysine fermentation meal, etc.), thickening agent (carboxymethylcellulose, alginic acid, etc.), yeast, eicosapentaenoic acid, and docosahexaenoic acid. Among these, for example, eicosapentaenoic acid and docosahexaenoic acid are preferred as an ingredient of a feed for fry or young fish.

The feed of the present invention may contain, for example, an additive for fishery. Specific examples of the additive for fishery include, for example, drugs for fishery such as erythromycin preparation, ampicillin preparation, praziquantel preparation, lysozyme chloride preparation, oxytetracycline hydrochloride preparation, spiramycin preparation, sodium nifurstyrenate preparation, lincomycin hydrochloride preparation, flumequine preparation, and glutathione preparation; nutritional supplementary substances including vitamins such as vitamin C, vitamin B1, vitamin A, vitamin D, and vitamin E, and amino acids such as lysine, methionine, and histidine; dyes such as β-carotene, astaxanthin, and canthaxanthin; and so forth.

The contained amounts of the ingredients contained in the feed of the present invention can be appropriately determined depending on various conditions such as type and growth stage of the objective aquatic organism, and usage scheme of the feed of the present invention. For example, the contained amount of each ingredient in the feed of the present invention may be the same as the contained amount of the corresponding ingredient in usual feeds for aquatic organisms. In the feed of the present invention, for example, the amount of fish meal may be reduced. The situation that the amount of fish meal is reduced is also referred to as "low fish meal".

The expression "the amount of fish meal is reduced" means that the feed of the present invention never contains or does not partially contain fish meal that should be blended in a feed for an aquatic organism. That is, in other words, the expression "the amount of fish meal is reduced" means that the amount of the fish meal contained in the feed of the present invention is smaller than the amount of fish meal that should be blended in a feed for an aquatic organism, and may also include cases where the feed of the present invention does not contain fish meal at all. The expression that "fish meal that should be blended in a feed for an aquatic organism" means fish meal in a minimum addition amount that does not cause a reduction of growth of an aquatic organism under conditions where the arginine derivative is not blended as compared with a case where the aquatic organism is bred by using a usual feed for an aquatic organism containing fish meal as a main ingredient. The amount of fish meal that should be blended in a feed for an aquatic organism can be appropriately determined according to various conditions such as type and growth stage (for example, fry stage and adult fish stage) of the objective aquatic organism.

The contained amount (concentration) of the fish meal in the feed of the present invention, for example, may be 0% (w/w) or higher, 5% (w/w) or higher, 10% (w/w) or higher, 20% (w/w) or higher, 30% (w/w) or higher, 40% (w/w) or higher, 50% (w/w) or higher, 60% (w/w) or higher, or 70% (w/w) or higher, may be 90% or lower, 80% or lower, 70% or lower, 60% (w/w) or lower, 50% (w/w) or lower, or 40% (w/w) or lower, or may be within a range defined by any uncontradictory combination of these ranges. When the feed of the present invention is a low fish meal feed, the contained amount (concentration) of the fish meal in the feed of the present invention, for example, may be 0% (w/w) or higher, 5% (w/w) or higher, 10% (w/w) or higher, 20% (w/w) or higher, 30% (w/w) or higher, or 40% (w/w) or higher, may be 60% (w/w) or lower, 50% (w/w) or lower, or 40% (w/w) or lower, or may be within a range defined by any uncontradictory combination of these ranges.

The contained amount (concentration) of the arginine derivative in the feed of the present invention, for example, may be 0.011% (w/w) or higher, 0.012% (w/w) or higher, 0.013% (w/w) or higher, 0.015% (w/w) or higher, 0.017% (w/w) or higher, 0.02% (w/w) or higher, 0.024% (w/w) or higher, 0.03% (w/w) or higher, 0.04% (w/w) or higher, 0.06% (w/w) or higher, 0.08% (w/w) or higher, 0.1% (w/w) or higher, or 0.11% (w/w) or higher, may be 1% (w/w) or lower, 0.7% (w/w) or lower, 0.5% (w/w) or lower, 0.4% (w/w) or lower, 0.32% (w/w) or lower, 0.27% (w/w) or lower, 0.2% (w/w) or lower, 0.15% (w/w) or lower, 0.1% (w/w) or lower, 0.09% (w/w) or lower, 0.08% (w/w) or lower, 0.07% (w/w) or lower, 0.06% (w/w) or lower, or 0.055% (w/w) or lower, or may be within a range defined by any uncontradictory combination of these ranges. Specifically, the contained amount of the arginine derivative in the feed of the present invention in the case of agmatine may be, for example, 0.011 to 0.1% (w/w), 0.015 to 0.08% (w/w), 0.02 to 0.06% (w/w), or 0.024 to 0.055% (w/w). Specifically, the contained amount of the arginine derivative in the feed of the present invention in the case of putrescine may be, for example, 0.08 to 1% (w/w), 0.1 to 0.5% (w/w), or 0.11 to 0.32% (w/w). The contained amount (concentration) of the arginine derivative in the feed of the present invention may be higher than that of a usual feed for an aquatic organism, for example, by 0.001% (w/w) or more, 0.002% (w/w) or more, 0.003% (w/w) or more, 0.005% (w/w) or more, 0.007% (w/w) or more, 0.01% (w/w) or more, 0.014% (w/w) or more, 0.02% (w/w) or more, 0.03% (w/w) or more, 0.04% (w/w) or more, 0.05% (w/w) or more, 0.06% (w/w) or more, or 0.067% (w/w) or more, by 0.9% (w/w) or less, 0.6% (w/w) or less, 0.4% (w/w) or less, 0.3% (w/w) or less, 0.25% (w/w) or less, 0.2% (w/w) or less, 0.15% (w/w) or less, 0.09% (w/w) or less, 0.08% (w/w) or less, 0.07% (w/w) or less, 0.06% (w/w) or less, 0.05% (w/w) or less, or 0.043% (w/w) or less, or by a percentage within a range defined by any uncontradictory combination of these ranges.

The feed of the present invention can be produced by combining the arginine derivative and the other ingredient(s) so that the arginine derivative is contained at a desired concentration in the feed. Methods for producing the feed of the present invention are not particularly limited. For example, the feed of the present invention can be produced by the same method as that for usual feeds for aquatic organisms using the same raw materials as those for usual feeds for aquatic organisms except that the arginine derivative is added (blended). When a raw material other than the arginine derivative to be blended in the feed of the present invention contains the arginine derivative, the arginine derivative may be added so that the total amount of the arginine derivative including that contained in such a raw material should be the desired contained amount of the arginine derivative. For example, usual feeds for aquatic organisms such as feeds for aquatic organisms containing fish meal as a main ingredient may contain about 0.01% (w/w) of agmatine derived from natural raw materials. In such a case, agmatine may be added in an amount calculated by subtracting the contained amount of agmatine derived from natural raw materials from the desired contained amount of agmatine. The addition amounts of other arginine derivatives may also be determined in a similar manner. The addition amount of the arginine derivative, for example, may be 0.001% (w/w) or more, 0.002% (w/w) or more, 0.003% (w/w) or more, 0.005% (w/w) or more, 0.007% (w/w) or more, 0.01% (w/w) or more, 0.014% (w/w) or more, 0.02% (w/w) or more, 0.03% (w/w) or more, 0.04% (w/w) or more, 0.05% (w/w) or more, 0.06% (w/w) or more, or 0.067% (w/w) or more, may be 0.9% (w/w) or less, 0.6% (w/w) or less, 0.4% (w/w) or less, 0.3% (w/w) or less, 0.25% (w/w) or less, 0.2% (w/w) or less, 0.15% (w/w) or less, 0.09% (w/w) or less, 0.08% (w/w) or less, 0.07% (w/w) or less, 0.06% (w/w) or less, 0.05% (w/w) or less, or 0.043% (w/w) or less, or may be within a range defined by any uncontradictory combination of these ranges. Specifically, the addition amount of the arginine derivative in the case of agmatine may be, for example, 0.001 to 0.09% (w/w), 0.005 to 0.07% (w/w), 0.01 to 0.05% (w/w), or 0.014 to 0.043% (w/w). Specifically, the addition amount of the arginine derivative in the case of putrescine may be, for example, 0.02 to 0.9% (w/w), 0.04 to 0.4% (w/w), or 0.05 to 0.2% (w/w). The term "the addition amount of an arginine derivative" referred to above represents the ratio of the weight of the added arginine derivative to the weight of the total feed ingredients (including the added arginine derivative) constituting the feed of the present invention, and in other words, it represents the contained amount (concentration) of the added arginine derivative in the feed of the present invention. The arginine derivative may be added at any stage of the production process of the feed. That is, the arginine derivative may be added to a raw material of the feed, to the feed in the middle of the production, or to the completed feed. For example, the arginine derivative may be mixed with the other raw material(s), and the mixture is mold as required, to produce the feed of the present invention, or the arginine derivative may be sprinkled on an already produced feed such as commercial feed pellets, to produce the feed of the present invention. Specifically, for example, the arginine derivative may be added to minced fish meat or other raw material(s) to be blended, to produce the feed of the present invention.

The form of the feed of the present invention is not particularly limited, so long as it can be ingested by an objective aquatic organism. That is, the feed of the present invention may be in any form such as powder, granule, crumble, pellet, cube, paste, and liquid. The feed of the present invention may be produced in the form of, for example, pellet such as dry pellet and moist pellet. The form of the feed of the present invention can be appropriately chosen depending on various conditions such as type and growth stage of the objective aquatic organism. For example, for fry, the feed in the form of powder or crumble can usually be preferably used. For adult fish, dry pellets can usually be preferably used.

The feed of the present invention may contain the arginine derivative and the other ingredients as a mixture thereof, or may separately contain them as individual ingredients or as arbitrary combinations thereof. For example, the feed of the present invention may be provided as a set of the arginine derivative for addition, and a feed before addition of the arginine derivative, which are separately packaged. In such a case, the ingredients included in the set can be fed as a mixture prepared before feeding or at the time of feeding, or separately fed. The arginine derivative for addition may be made into a preparation in a desired form as an arginine derivative preparation. The feed before addition of arginine derivative may be, for example, an already prepared feed such as commercial feed pellets. Such an already prepared feed can be prepared by blending desired ingredients such as the ingredients contained in usual feeds for aquatic organisms in a conventional manner.

### <4> Composition of the present invention

The composition of the present invention is a composition for culturing (breeding) of an aquatic organism, namely, a composition used for culturing (breeding) of an aquatic organism, containing an arginine derivative. The composition of the present invention may contain one kind of arginine derivative, or may contain two or more kinds of arginine derivatives in combination. By feeding the composition of the present invention to an aquatic organism to culture (breed) the aquatic organism, a breeding result of the aquatic organism can be improved. That is, the composition of the present invention may also be, for example, a breeding result-improving agent for an aquatic organism.

The composition of the composition of the present invention is not particularly limited, so long as the composition of the present invention contains an arginine derivative, and a breeding result-improving effect can be obtained. The type(s) of the ingredient(s) contained in the composition of the present invention can be appropriately chosen according to various conditions such as type and growth stage of the objective aquatic organism, and usage scheme of the composition of the present invention. The contained amount(s) of the ingredient(s) contained in the composition of the present invention can be appropriately chosen according to various conditions such as type and growth stage of the objective aquatic organism, and usage scheme of the composition of the present invention.

The composition of the present invention may consist of an arginine derivative, or may contain an ingredient other than the arginine derivative. Examples of the ingredient other than the arginine derivative include, for example, ingredients usually used for use in foods, feeds, drugs, and so forth. Specific examples of the ingredient other than the arginine derivative include, for example, such ingredients other than arginine derivative described above in the descriptions concerning the feed of the present invention. That is, the composition of the present invention may also be constituted as a feed for an aquatic organism. Namely, an embodiment of the composition of the present invention may be the feed of the present invention described above.

The contained amount (concentration) of the arginine derivative in the composition of the present invention, for example, may be 0.011% (w/w) or higher, 0.012% (w/w) or higher, 0.013% (w/w) or higher, 0.015% (w/w) or higher, 0.017% (w/w) or higher, 0.02% (w/w) or higher, 0.024% (w/w) or higher, 0.03% (w/w) or higher, 0.04% (w/w) or higher, 0.06% (w/w) or higher, 0.08% (w/w) or higher, 0.1% (w/w) or higher, 0.11% (w/w) or higher, 0.3% (w/w) or higher, 0.5% (w/w) or higher, or 1% (w/w) or higher, may be 100% (w/w) or lower, 99.9% (w/w) or lower, 70% (w/w) or lower, 50% (w/w) or lower, 30% (w/w) or lower, 10% (w/w) or lower, 5% (w/w) or lower, 3% (w/w) or lower, 1% (w/w) or lower, 0.7% (w/w) or lower, 0.5% (w/w) or lower, 0.4% (w/w) or lower, 0.32% (w/w) or lower, 0.27% (w/w) or lower, 0.2% (w/w) or lower, 0.15% (w/w) or lower, 0.1% (w/w) or lower, 0.09% (w/w) or lower, 0.08% (w/w) or lower, 0.07% (w/w) or lower, 0.06% (w/w) or lower, or 0.055% (w/w) or lower, or may be within a range defined by any uncontradictory combination of these ranges.

The composition of the present invention may be provided as, for example, an arginine derivative preparation. The composition of the present invention may be in any form such as powder, granule, pellet, cube, paste, and liquid.

The composition of the present invention may be used, for example, together with a feed for an aquatic organism. The composition of the present invention may be used, for example, together with a feed for an aquatic organism so that the contained amount (concentration) of the arginine derivative in the feed should be the contained amount (concentration) of the arginine derivative in the feed of the present invention described above. The composition of the present invention may be used, for example, together with a feed for an aquatic organism so that the addition amount of the arginine derivative to the feed should be the addition amount of the arginine derivative in the feed of the present invention described above. The descriptions concerning the feed of the present invention mentioned above can be applied *mutatis mutandis* to the feed for an aquatic organism. For example, the feed for an aquatic organism may be constituted so as to be similar to usual feeds for aquatic organisms, or may be a feed having a reduced contained amount of fish meal. When the composition of the present invention is constituted as a feed, the composition of the present invention itself may be used as a feed for an aquatic organism.

The present invention also provides a novel use of an arginine derivative. Examples of the novel use of an arginine derivative include, for example, a use of an arginine derivative for manufacture of a breeding result-improving agent for an aquatic organism.

### <5> Method of present invention

The method of the present invention is a method for culturing (breeding) an aquatic organism, which method comprises feeding an arginine derivative to the aquatic organism. In the method of the present invention, one kind of arginine derivative may be fed, or two or more kinds of arginine derivatives may be fed in combination.

By culturing an aquatic organism by the method of the present invention, a breeding result of the aquatic organism can be improved. That is, the method of the present invention may also be a method for improving a breeding result of an aquatic organism, which method comprises feeding an arginine derivative to the aquatic organism.

The feeding scheme of the arginine derivative is not particularly limited, so long as a breeding result-improving effect can be obtained.

The arginine derivative can be fed to an aquatic organism by, for example, utilizing the feed of the present invention (namely, by feeding the feed of the present invention). That is, an embodiment of the method of the present invention may be a method for culturing an aquatic organism, which method comprises feeding the feed of the present invention to the aquatic organism. The expression "to feed the feed of the present invention" includes not only to feed the feed of the present invention prepared beforehand, but also to feed an arginine derivative and other ingredient(s) in combination so that they satisfy the requirement(s) of the feed of the present invention described above. That is, an embodiment of the method of the present invention may be a method for culturing an aquatic organism, which method comprises feeding an arginine derivative and a feed for an aquatic organism in combination to the aquatic organism. For example, an arginine derivative for addition and a feed before addition of an arginine derivative may be separately provided, and fed as a mixture of them prepared before or at the time of feeding, or fed separately. The feeding amount of the arginine derivative can be chosen so that, for example, the contained amount (concentration) of the arginine derivative in the feed should be the contained amount (concentration) of the arginine derivative in the feed of the present invention described above. The feeding amount of the arginine derivative can be also determined so that, for example, the addition amount of the arginine derivative to the feed is the addition amount of the arginine derivative in the feed of the present invention described above.

The feeding amount of the feed of the present invention is not particularly limited, so long as a breeding result-improving effect can be obtained. The feeding amount of the feed of the present invention can be appropriately chosen according to various conditions such as type of the objective aquatic organism. The feeding amount of the feed of the present invention may be, for example, the satiation amount. The feed of the present invention may be fed once a day, or two or more times a day as divided portions. The feed of the present invention may also be fed once in several days. The feeding amount of the feed of the present invention at the time of each feeding may or may not be constant in terms of the amount of the arginine derivative. The concentration of the arginine derivative in the feed of the present invention at the time of each feeding may or may not be constant.

The period of feeding of the feed of the present invention is not particularly limited, so long as a breeding result-improving effect can be obtained. The period of feeding the feed of the present invention can be appropriately chosen according to various conditions such as type of the objective aquatic organism. The feed of the present invention may be continuously fed over the entire period of culturing (breeding), or may be fed only in a partial period of culturing (breeding). The term "partial period" may refer to, for example, a period consisting of 10% or more, 20% or more, 30% or more, 50% or more, 70% or more, or 90% or more of the entire period of culturing (breeding). The period of feeding of the feed of the present invention, for example, may be 3 days or longer, one week or longer, 2 weeks or longer, 3 weeks or longer, 4 weeks or longer, 2 months or longer, or 3 months or longer, may be one year or shorter, 6 months or shorter, 4 months or shorter, 3 months or shorter, 2 months or shorter, 4 weeks or shorter, or 3 weeks or shorter, or may be within a range defined by any uncontradictory combination of these ranges. Specifically, the period of feeding of the feed of the present invention may be, for example, 2 weeks to 2 months. Feeding of the feed of the present invention may be repeatedly continued and interrupted for arbitrary periods and with arbitrary intervals.

Cultivation (breeding) of an aquatic organism can be performed by the same method as usual methods for culturing (breeding) aquatic organisms except that the feed of the present invention is fed. The culturing (breeding) can be performed in, for example, a fish pen in the sea or fish tank on land. The term "culturing" includes propagation culturing in which only production of seed organism (fry production etc.) is performed, and culturing for growing fish to produce adult organism (parent fish etc.).

Similarly, the arginine derivative can be fed to an aquatic organism by, for example, using the composition of the present invention (namely, by feeding the composition of the present invention). That is, an embodiment of the method of the present invention may also be a method for culturing an aquatic organism, which method comprises feeding the composition of the present invention to the aquatic organism. The composition of the present invention can be fed to an aquatic organism, for example, independently or together with a feed for an aquatic organism. The descriptions concerning the feeding scheme of the feed of the present invention mentioned above can be applied *mutatis mutandis* to feeding scheme of the composition of the present invention. That is, the composition of the present invention can be fed, for example, together with a feed for an aquatic organism so that the contained amount (concentration) of the arginine derivative in the feed should be the contained amount (concentration) of the arginine derivative in the feed of the present invention described above. The composition of the present invention can also be fed, for example, together with a feed for aquatic organisms so that the addition amount of the arginine derivative to the feed should be the addition amount of the arginine derivative in the feed of the present invention described above.

Such descriptions concerning the feeding scheme of the feed of the present invention or the composition of the present invention as mentioned above may be applied *mutatis mutandis* to any other case of feeding an arginine derivative.

### Examples

Hereafter, the present invention will be more specifically explained with reference to examples. However, it should be understood that the examples do not limit the scope of the present invention in any meanings.

### Example 1: Effect of agmatine in tiger puffer

In this example, effect of feeding a feed containing agmatine on results of breeding of tiger puffer was examined.

### <Methods of experiment>

A breeding test was performed for 28 days by using tiger puffer fry having an average weight of 2.56 ± 0.01 g, and giving a satiation amount of a test feed thereto. As the test feed, a usual feed (experimental group 1), a low fish meal feed (experimental group 4), the usual feed used for the experimental group 1, but added with 0.014% or 0.043% of agmatine (experimental groups 2 and 3, respectively), and the low fish meal used for the experimental group 4, but added with 0.014% or 0.043% of agmatine (experimental groups 5 and 6, respectively) were used. The added agmatine was agmatine sulfate, and the addition amounts are represented in terms of weight of agmatine as a free compound. The compositions of the test feeds are shown in Table 1. The analytically determined agmatine amounts in the test feeds are shown in Table 2. The tiger puffer fry in a number of 100 were put in each tank, and the test was performed in duplicate for the experimental groups 1 and 4, and in triplicate for the other experimental groups. As indexes of breeding results, body weight and length were measured on the test starting day, 14th day from the test starting day, and the test ending day (28th day from the test starting day). The results are shown in Table 3. Weight gains and feed intakes per one fish, feed conversion ratios (= feed intake per one fish/weight gain per one fish), and caudal fin deficiency rates observed for the experimental groups for 28 days are shown in Table 4.

**Table 1: Compositions of test feeds**

| | Experimental group | | | | | |
|---|---|---|---|---|---|---|
| | 1 | 2 | 3 | 4 | 5 | 6 |
| Animal feed (%) | 71 | 71 | 71 | 40 | 40 | 40 |
| Soybean meal (%) | 0 | 0 | 0 | 6 | 6 | 6 |
| Corn gluten (%) | 0 | 0 | 0 | 5 | 5 | 5 |
| Lysine fermentation meal (%) | 0 | 0 | 0 | 20 | 20 | 20 |
| Cereal (%) | 15 | 15 | 15 | 15 | 15 | 15 |
| Others (%) | 14 | 14 | 14 | 14 | 14 | 14 |
| Agmatine (g/kg) | 0 | 0.14 | 0.43 | 0 | 0.14 | 0.43 |
| Total (%) | 100 | 100 | 100 | 100 | 100 | 100 |

**Table 2: Analytical values of agmatine amount in test feeds**

| | Experimental group | | | | | |
|---|---|---|---|---|---|---|
| | 1 | 2 | 3 | 4 | 5 | 6 |
| Agmatine (mg/kg) | 99 | 241 | 535 | 105 | 249 | 541 |

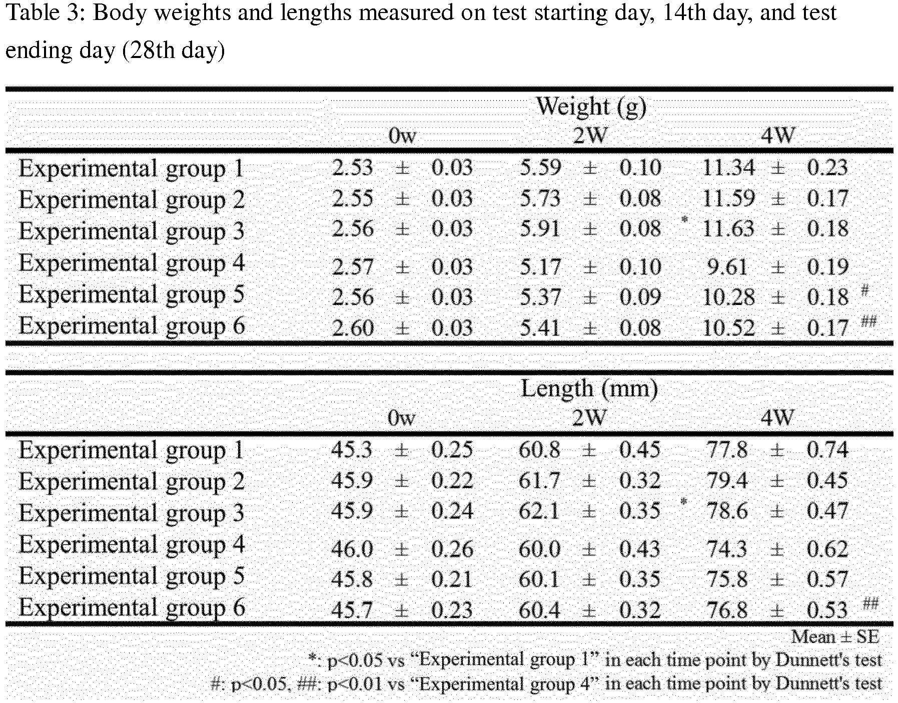

**Table 4: Feed intakes, weight gains, feed conversion ratios, and caudal fin deficiency rates for 28 days**

| | Experimental group | | | | | |
|---|---|---|---|---|---|---|
| | 1 | 2 | 3 | 4 | 5 | 6 |
| Feed intake per fish (g) | 8.84 | 8.98 | 8.81 | 8.49 | 8.75 | 8.71 |
| Weight gain per fish (g) | 8.92 | 9.07 | 9.11 | 7.26 | 7.85 | 8.04 |
| Feed conversion ratio | 0.99 | 0.99 | 0.97 | 1.17 | 1.11 | 1.08 |
| Caudal fin deficiency rate (%) | 13.1 | 7.5 | 14.9 | 23.4 | 11.7 | 4.1 |

### <Results and discussion>

When agmatine was added to the low fish meal feed, i.e., in the experimental groups 5 and 6, significant increases or increasing tendencies of body weight and length were observed after breeding for four weeks compared with the control group (experimental group 4). When agmatine was added to the usual feed, i.e., in the experimental groups 2 and 3, increasing tendencies of body weight and length were observed after breeding for four weeks compared with the control group (experimental group 1). For the experimental group 3, significant increases in body weight and length were temporarily observed after two weeks from the start of the breeding compared with the control group (experimental group 1). As for the feed conversion ratio, improvement (i.e. reduction) due to the addition of agmatine was observed for both the usual feed and low fish meal feed. With the low fish meal feed (experimental group 4), elevation of the caudal fin deficiency rate was observed compared with the usual feed (experimental group 1). This is considered to be caused by increase in biting each other due to reduction of the fish meal in the feed. On the other hand, when agmatine was added to the low fish meal feed used in the experimental group 4, i.e., in the experimental groups 5 and 6, the caudal fin deficiency rate decreased in an agmatine addition concentration-dependent manner. These breeding results revealed that agmatine has breeding result-improving effects, such as effect of improving (reducing) feed conversion ratio, effect of promoting growth, and effect of suppressing deficiency of caudal fin, for tiger puffer.

### Example 2: Effect of putrescine in tiger puffer

In this example, effect of feeding a feed containing putrescine on results of breeding of tiger puffer was examined.

A breeding test was performed for 28 days by using tiger puffer fry having an average weight of 2.62 ± 0.01 g and giving a satiation amount of a test feed thereto. As the test feed, a usual feed (experimental group 1), a low fish meal feed (experimental group 3), the usual feed used for the experimental group 1, but added with 0.2% of putrescine (experimental group 2), and the low fish meal used for the experimental group 3, but added with 0.067% or 0.2% of putrescine (experimental group 4 and 5, respectively) were used. The added putrescine was a dibasic acid salt of putrescine, and the addition amounts are represented in terms of weight of putrescine as a free compound. The compositions of the test feeds are shown in Table 5. The analytically determined putrescine amounts in the test feeds are shown in Table 6. The tiger puffer fry in a number of 50 were put in each tank, and the test was performed in triplicate for all the experimental groups. As indexes of breeding results, body weight and length were measured on the test starting day, 14th day from the test starting day, and the test ending day (28th day from the test starting day). The results are shown in Table 7. Weight gains and feed intakes per one fish, and feed conversion ratios (= feed intake per one fish/weight gain per one fish) observed for the experimental groups for 28 days are shown in Table 8.

**Table 5: Compositions of test feeds**

| | Experimental group | | | | |
|---|---|---|---|---|---|
| | 1 | 2 | 3 | 4 | 5 |
| Animal feed (%) | 71 | 71 | 40 | 40 | 40 |
| Soybean meal (%) | 0 | 0 | 3 | 3 | 3 |
| Corn gluten (%) | 0 | 0 | 10 | 10 | 10 |
| Lysine meal (%) | 0 | 0 | 20 | 20 | 20 |
| Cereal (%) | 15 | 15 | 15 | 15 | 15 |
| Others (%) | 14 | 14 | 12 | 12 | 12 |
| Putrescine (g/kg) | 0 | 2 | 0 | 0.67 | 2 |
| Total (%) | 100 | 100 | 100 | 100 | 100 |

**Table 6: Analytical values of putrescine amount in test feeds**

| | Experimental group | | | | |
|---|---|---|---|---|---|
| | 1 | 2 | 3 | 4 | 5 |
| Putrescine (mg/kg) | 661 | 3159 | 692 | 1417 | 2970 |

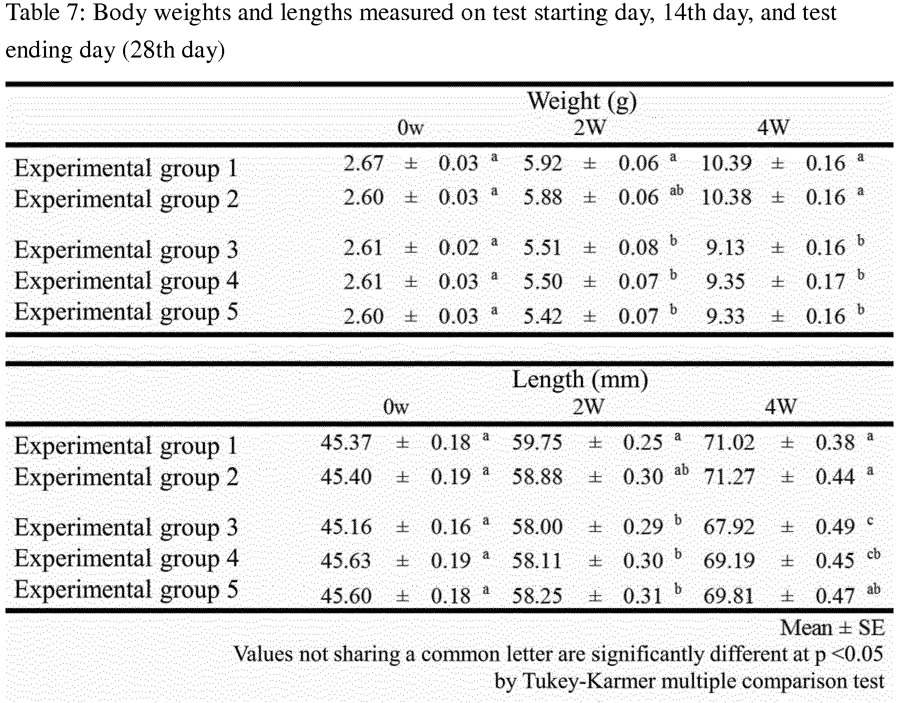

**Table 8: Feed intakes, weight gains, and feed conversion ratios for 28 days**

| | Experimental group | | | | |
|---|---|---|---|---|---|
| | 1 | 2 | 3 | 4 | 5 |
| Feed intake per fish (g) | 23.8 | 24.3 | 24.5 | 24.5 | 24.0 |
| Weight gain per fish (g) | 23.2 | 23.4 | 19.5 | 20.2 | 22.3 |
| Feed conversion ratio | 1.03 | 1.04 | 1.25 | 1.21 | 1.08 |

### <Results and discussion>

When putrescine was added to the low fish meal feed, i.e., in the experimental groups 4 and 5, increasing tendency and significant increase of body length, respectively, were observed after breeding for four weeks compared with the control group (experimental group 3). As also for the feed conversion ratio, improvement (i.e. reduction) due to the addition of putrescine was observed for the low fish meal feed. These breeding results revealed that putrescine has breeding result-improving effects, such as effect of improving (reducing) feed conversion ratio and effect of promoting growth, for tiger puffer.

### Example 3: Effect of agmatine in red seabream

In this example, effect of feeding a feed containing agmatine on results of breeding of red seabream was examined.

### <Methods of experiment>

A breeding test was performed for 28 days by using red seabream fry having an average weight of 1.45 ± 0.01 g and giving a satiation amount of a test feed thereto.
As the test feed, a usual feed (experimental group 1), a low fish meal feed (experimental group 2), and the low fish meal feed, but added with 0.043% of agmatine (experimental group 3) were used. The added agmatine was agmatine sulfate, and the addition amounts are represented in terms of weight of agmatine as a free compound. The compositions of the test feeds are shown in Table 9. The analytically determined agmatine amounts in the test feeds are shown in Table 10. The red seabream fry in a number of 50 were put in each tank, and the test was performed in triplicate for all the experimental groups. As indexes of breeding results, body weight and length were measured on the test starting day, 14th day from the test starting day, and the test ending day (28th day from the test starting day). The results are shown in Table 11. Weight gains and feed intakes per one fish, and feed conversion ratios (= feed intake per one fish/weight gain per one fish) observed for the experimental groups for 28 days are shown in Table 12.

**Table 9: Compositions of test feeds**

| | Experimental group 1 | Experimental group 2 | Experimental group 3 |
|---|---|---|---|
| Animal feed (%) | 71 | 40 | 40 |
| Soybean meal (%) | 0 | 6 | 6 |
| Corn gluten (%) | 0 | 5 | 5 |
| Lysine fermentation meal (%) | 0 | 20 | 20 |
| Cereal (%) | 15 | 15 | 15 |
| Others (%) | 14 | 14 | 14 |
| Agmatine (g/kg) | 0 | 0 | 0.43 |
| Total (%) | 100 | 100 | 100 |

**Table 10: Analytical values of agmatine amount in test feeds**

| | Experimental group 1 | Experimental group 2 | Experimental group 3 |
|---|---|---|---|
| Agmatine (mg/kg) | 68 | 48 | 436 |

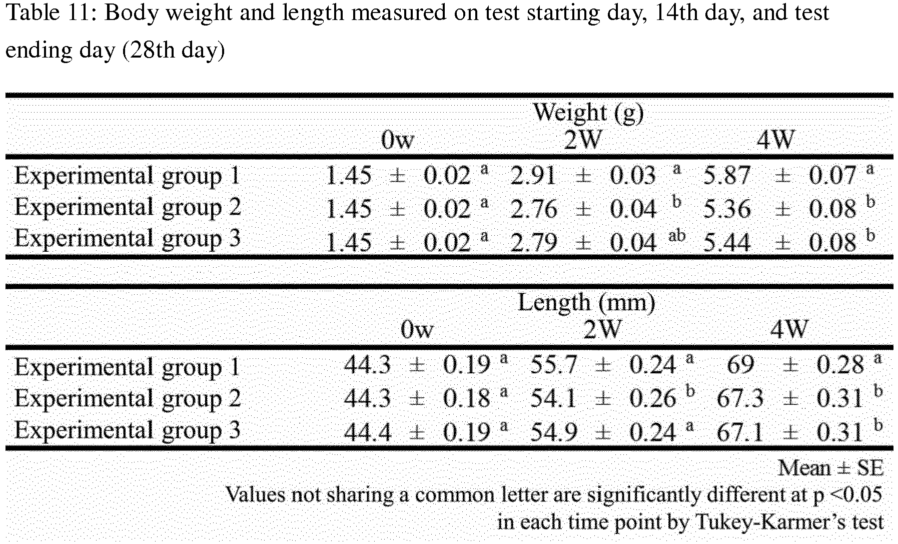

**Table 12: Feed intake, weight gain, and feed conversion ratio for 28 days**

| | Experimental group 1 | Experimental group 2 | Experimental group 3 |
|---|---|---|---|
| Feed intake per fish (g) | 5.49 | 5.85 | 5.76 |
| Weight gain per fish (g) | 4.42 | 3.91 | 4.00 |
| Feed conversion ratio | 1.24 | 1.50 | 1.44 |

### <Results and discussion>

When agmatine was added to the low fish meal feed, i.e., in the experimental group 3, increasing tendency of body weight was observed after breeding for four weeks compared with the control group (experimental group 2). As also for the feed conversion ratio, improvement (i.e. reduction) due to the addition of agmatine was observed for the low fish meal feed. These breeding results revealed that agmatine has an effect of improving (reducing) feed conversion ratio and effect of promoting growth for red seabream.

### Industrial Applicability

According to the present invention, breeding results in breeding of aquatic organisms such as fishes and crustacean can be improved.

## Claims

1. A feed for an aquatic organism, the feed containing an arginine derivative.

2. The feed according to claim 1, which is a feed for an aquatic organism to which the arginine derivative has been added.

3. The feed according to claim 1 or 2, which is a feed for an aquatic organism of which the contained amount of the arginine derivative has been increased.

4. The feed according to any one of claims 1 to 3, wherein the arginine derivative is agmatine.

5. The feed according to any one of claims 1 to 3, wherein the arginine derivative is putrescine.

6. The feed according to any one of claims 1 to 5, wherein the contained amount of the arginine derivative is 0.02% (w/w) or higher.

7. The feed according to any one of claims 1 to 6, wherein the contained amount of the arginine derivative is 0.08% (w/w) or higher.

8. The feed according to any one of claims 1 to 7, of which the amount of fish meal has been reduced.

9. The feed according to any one of claims 1 to 8, wherein the contained amount of fish meal is 60% (w/w) or lower.

10. The feed according to any one of claims 1 to 9, wherein the aquatic organism is an aquatic organism deficient in biosynthesis system of the arginine derivative.

11. The feed according to any one of claims 1 to 10, wherein the aquatic organism is a fish or crustacean.

12. The feed according to any one of claims 1 to 11, wherein the aquatic organism is tiger puffer, bastard halibut, bluefin tuna, Atlantic salmon, rainbow trout, European eel, catfish, tilapia, red tonguesole, Atlantic cod, cyprinodont, zebrafish, red seabream, or shrimp.

13. A composition used for culturing an aquatic organism, the composition containing an arginine derivative at a contained amount of 99.9% (w/w) or lower.

14. The composition according to claim 13, wherein the arginine derivative is agmatine.

15. The composition according to claim 13, wherein the arginine derivative is putrescine.

16. The composition according to any one of claims 13 to 15, wherein the composition is used together with a feed for an aquatic organism so that the contained amount of the arginine derivative in the feed is 0.02% (w/w) or higher.

17. The composition according to any one of claims 13 to 16, wherein the composition is used together with a feed for an aquatic organism so that the contained amount of the arginine derivative in the feed is 0.08% (w/w) or higher.

18. The composition according to any one of claims 13 to 17, wherein the composition is used together with a feed for an aquatic organism so that the addition amount of the arginine derivative to the feed is 0.01% (w/w) or larger.

19. The composition according to any one of claims 13 to 18, wherein the feed for an aquatic organism is a feed for an aquatic organism of which the amount of fish meal has been reduced.

20. The composition according to any one of claims 13 to 19, wherein the contained amount of fish meal in the feed for an aquatic organism is 60% (w/w) or lower.

21. The composition according to any one of claims 13 to 20, wherein the aquatic organism is an aquatic organism deficient in biosynthesis system of the arginine derivative.

22. The composition according to any one of claims 13 to 21, wherein the aquatic organism is a fish or crustacean.

23. The composition according to any one of claims 13 to 22, wherein the aquatic organism is tiger puffer, bastard halibut, bluefin tuna, Atlantic salmon, rainbow trout, European eel, catfish, tilapia, red tonguesole, Atlantic cod, cyprinodont, zebrafish, red seabream, or shrimp.

24. The composition according to any one of claims 13 to 23, wherein the composition is an agent for improving a breeding result for the aquatic organism.

25. The composition according to claim 24, wherein the improvement of the breeding result consists of an increase in body weight, an increase in body length, an improvement of feed conversion ratio, a decrease of caudal fin deficiency rate, or a combination thereof.

26. A method for culturing an aquatic organism, the method comprising:
feeding an arginine derivative to the aquatic organism.

27. The method according to claim 26, wherein the arginine derivative is fed to the aquatic organism by feeding the feed according to any one of claims 1 to 12, or the composition according to any one of claims 13 to 25 to the aquatic organism.
